# EUROPEAN PATENT SPECIFICATION

(11) **EP 4 004 241 B1**
(45) Date of publication and mention of the grant of the patent: **18.10.2023**
(21) Application number: 20751667.5
(22) Date of filing: 10.07.2020
(51) Int. Cl.: C14C 15/00, B32B 27/40, C09D 175/04, C14C 11/00, B32B 9/02, B32B 7/12, B32B 37/12, B32B 9/04

(54) **PLANT FOR ENNOBLING SKINS AND PROCESS FOR ENNOBLING SKINS**
ANLAGE ZUM VEREDELN VON HÄUTEN UND VERFAHREN ZUM VEREDELN VON HÄUTEN
INSTALLATION ET PROCÉDÉ DE FINITION DE PEAUX

(30) Priority: 12.07.2019 IT 201900011601; 24.07.2019 IT 201900012723
(43) Date of publication of application: 01.06.2022
(73) Proprietor: COS.T.A. S.R.L., 36054 Montebello Vicentino (VI) (IT)
(72) Inventor: ROVETTI, Mariano, 36050 Montorso Vicentino (VI) (IT)
(74) Representative: Marchioro, Paolo
(86) International application number: PCT/IB2020/056516
(87) International publication number: WO 2021/009642

(56) References cited:
- EP-A2- 0 296 542
- GB-A- 1 265 951
- DATABASE WPI Week 201906 Thomson Scientific, London, GB; AN 2018-914598 XP002798864, & CN 108 774 653 A (SHANDONG LAIFUTE LEATHER PROD CO LTD) 9 November 2018 (2018-11-09)

## Description

The invention relates to a plant for ennobling skins and leather in general.

A process for ennobling skins that can be carried out with a similar plant is also the object of the invention.

Nowadays the plants for ennobling skins and leather in general are usually divided into specific operating zones, each of which has a well-established function.

The ennobling of a skin, in particular of the innermost and less valuable layers, provides for surface treatments aimed at improving the technical and aesthetic characteristics of the skin thus processed.

Typically, an ennobling plant comprises the following operating zones:
- an inlet zone, which can be of two types depending on the transfer medium chosen for the transfer of a finishing surface layer onto the skin: either with a loader comprising a series of matrices, that is metal plates, or with an unroller of siliconed paper;
- a preparation zone of the transfer medium; in the case of a matrix system there are machines for spraying a preparation product on the same matrices; in the case of the paper system, the preparation product can be applied either by spray or with a precision spreader, the so-called 'doctor blade'; after this application, the preparation product is dried, both as regards the matrices and the siliconed paper;
- a first polyurethane spraying booth: after a matrix, or a section of siliconed paper, has left the drying stage, it is made to enter a spraying booth. Here there are spraying means suitable for generally mixing polyurethane and a coloured catalyst to then spray them so as to form a first layer, known as the 'film', which will acquire the pattern, that is the 'grain', which has been previously impressed on the matrix or on the paper. It is then switched to a drying step, before entering a second spraying booth;
- a second polyurethane spraying booth: in this booth the same production processes as in the previous first booth take place, with the exception of drying, which in fact is not carried out, in order to allow the adhesion of the film to the skin for which it is intended;
- a coupling zone: as soon as the matrix or the siliconed paper leaves the second booth, the product to be coupled, i.e. either a skin, a fabric, or a regenerated leather or other similar body, lays thereon, and therefore on the fresh polyurethane part;
- a pressing zone: after the skin has been stretched over the fresh polyurethane, the sandwich thus created is passed below rubber pressure rollers, in order to compress the various layers so that air pockets cannot form among them, thus obtaining the maximum adhesion between skin and polyurethane;
- a drying stage, comprising steps of ventilation, heating, recirculation of new air and evacuation of saturated air;
- a separation zone: the skin with the polyurethane coating is separated from the matrix or from the siliconed paper, a risk-free operation since the well-dried polyurethane has memorized the pattern, that is the 'grain', and has already glued to the skin.

Such a plant, although known and appreciated, has some limitations.

A first important limitation is given by the fact that the pressing systems applied to eliminate the bubbles between the skin and the polyurethane finishing layer, in order to optimize the adhesion between said layers, may not be effective, with the consequent formation of unwanted 'orange peel' zones.

A second limitation of the known plants is given by the overall dimensions of a plant, since generally it also comprises a waiting zone or a parallel path for cooling the treated skins up to an ambient temperature which allows their superimposition on a stand.

The patent document EP0296542, which belongs to the same technical filed, is concerned with the improvement of leathers with defective surface by means of polymer coatings, hot press and possibility of moving towards the finishing substrate, but it doesn't face the above mentioned limitations.

The patent document GB 1265951 describes a method of reinforcing animal skins comprising laying out a series of skins on a conveyor belt, applying a continuous web of flexible material to cover the skins on the conveyor belt after coating the skins, or the web, with an adhesive material to secure them together, and stripping the resultant composite from the conveyor belt; not even this document addresses the limitations of the prior art.

The task of the present invention is to develop a plant for ennobling skins capable of obviating the above mentioned drawbacks and limitations of the prior art.

In particular, an object of the invention is to develop a process for the realisation of ennobled skins capable of obviating the limitations of the processes carried out with the plants of the known type.

An important object of the invention is to develop a plant which allows to realise ennobled skins with less superficial imperfections than the similar ennobled skins obtained with the known plants.

A similar object of the invention is to develop a process which allows to realise ennobled skins with less superficial imperfections than the similar ennobled skins obtained with the known processes.

A further object of the invention is to develop a system capable of ensuring a correct cooling of the ennobled skins with a smaller overall dimension than the known plants.

The above mentioned task and objects are achieved by a plant for ennobling skins and leather in general according to claim 1, as well as by a process for realising ennobled skins according to claim 13.

Further characteristics of the plant according to claim 1 are described in the dependent claims.

The aforesaid task and objects, together with the advantages that will be mentioned hereinafter, are indicated by the description of an embodiment of the invention, which is given by way of non-limiting example with reference to the attached drawings, where:
- figure 1 represents a side view of a first part of a plant according to the invention;
- figure 2 represents the same side view of figure 1 of a second part of a plant according to the invention;
- figure 3 represents a plan view of the first part of the plant of figure 1;
- figure 4 represents a plan view of the second part of the plant of figure 2;
- figure 5 represents a side view of a portion of the plant according to the invention;
- figure 6 represents a partially sectional side view of a detail of the plant according to the invention;
- figure 7 represents a front view of the detail of figure 6;
- figure 8 represents a schematic side view of the operation of the detail of figures 6 and 7;
- figure 9 represents a schematic sectional side view of another detail of the plant according to the invention;
- figure 10 represents a sectional side view of a first end zone of the plant according to the invention;
- figure 11 represents a sectional side view of an opposite second end zone of the plant according to the invention.

With reference to the cited figures, a plant for ennobling skins and leather in general, according to the invention, is indicated as a whole with the number **10**. Said plant **10** comprises:
- a first group **11** for preparing a finishing layer to be transferred onto a skin,
- a second group **12** for preparing a skin to receive said finishing layer,
- a third group **13** for transferring the finishing layer onto the skin.

The first group **11** comprises:
- a transport plate **14,** having a layer for support and for shaping of the finishing **16,**
- means **17** for realising a finishing layer **18** on the layer for support and for shaping **16**.

The second group **12** comprises:
- deposition means **40** for depositing a layer of adhesive **19** onto a skin **20,**
- positioning means **21** for positioning the skin **20** on the transport plate **14** with the layer of adhesive **19** positioned above the finishing layer **18**.

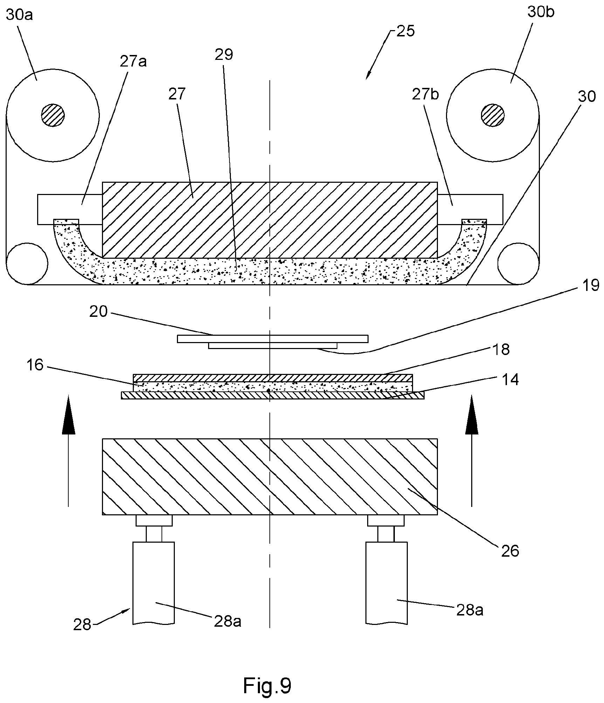

The layer for support and for shaping of the finishing **16**, the finishing layer **18** and the layer of adhesive **19** are well highlighted in figure 9.

The transport plates **14** are prepared with the layer for support and for shaping **16** in separate machines, which machines are to be understood of known type. The third group **13** comprises:
- at least one hot press **25,** exemplified schematically in figure 9, comprising in turn:
- a lower plane **26,**
- an upper plane **27,**
- closing and opening means **28** of the two planes **26** and **27** one with respect to the other,
- a thrust levelling layer **29** between the lower **26** and upper **27** planes, interposed between a skin **20** and the upper plane **27,**
- a protective film **30,** interposed between the thrust levelling layer **29** and the skin **20**.

The transport plate **14,** also called the 'matrix' in jargon, is made up, for example, of an aluminium foil 1.5 meters long, 1.5 meters wide and 2.5 millimetres thick.

The plant **10** comprises advancement means **50** for the transport plates **14**. Said advancement means **50** comprise, for example, belt or roller type conveyors.

Said advancement means **50** are configured to move the transport plates **14** in a same direction and in a same forward direction, defining a forward path for the plates **14** themselves.

Said advancement means **50** are configured to move the transport plates **14** keeping them at the same height from the ground for the entire forward path. The layer for support and for shaping **16** comprises, for example, a silicone layer.

Said layer for support and for shaping **16** has a thickness of 2.5 mm, for example.

Said layer for support and for shaping **16** defines an outline of the finish to be reproduced on a skin to be ennobled, as well as it defines the patterns of the surface finishes to be reproduced on the same skin to be ennobled, for example patterns imitating a crocodile skin.

The first group **11** also comprises a first heating station **31** for pre-heating the layer for support and for shaping **16**.

Said first heating station **31** comprises, for example, a diathermic oil heating station.

The temperature is of great importance especially in the first spraying that is made with the polyurethane on the transport plate **14**.

The first heating station **31** is therefore configured to raise the temperature of a transport plate **14** up to a value ranging between 80°C and 105°C. Preferably, said first heating station **31** is configured to raise the temperature of a transport plate **14** up to a value ranging between 95°C and 100°C.

The means **17** for realising a finishing layer **18** comprise, in the present embodiment, three pigmentation booths **32, 33** and **34** respectively, arranged in series, each of which is followed by a corresponding second heating station **35, 36** and **37** respectively.

Said pigmentation booths perform hot spraying operations.

The plant **10** according to the invention is to be understood as comprising a single pigmentation booth followed by a single corresponding second heating station.

The plant **10** according to the invention is to be understood as comprising also two or more pigmentation booths, each followed by a corresponding second heating station.

The pigmentation booths **32**, **33** and **34** are configured for polyurethane spraying.

The finishing layer **18** is therefore a pigmented polyurethane layer.

The finishing layer **18** is sprayed onto the silicone layer for support and for shaping **16**; in this way, the finishing layer **18** takes on the shape and the patterns of the layer for support and for shaping **16**.

The first group **11** also comprises one or more cooling stations, for example two cooling stations **38** and **39**.

The cooling stations **38** and **39** are configured to bring the transport plates **14**, with the layer for support and for shaping **16** and the finishing layer **18**, to a temperature lower than 45°C.

In particular, said cooling stations **38** and **39** are configured to bring the transport plates **14**, with the layer for support and for shaping **16** and the finishing layer **18**, to a temperature ranging from 25°C to 35°C.

In the second group **12**, the deposition means **40** comprise a spreading machine **41**, for example of the type with spreading roller.

The layer of adhesive **19** is understood to be made with a liquid adhesive, for example a water-based adhesive.

The composition of said adhesive depends, in a known way, on the thickness of the finishing layer **18**.

The second deposition means **40** also comprise one or more unloading conveyors **42** for preparing the skin **20** for the positioning on the transport plate **14**, as better described below.

Said second deposition means **40** are positioned at a higher height than the advancement means of the transport plates **14**.

In the embodiment of the invention described herein by way of non-limiting example of the invention itself, the positioning means **21** for positioning a skin **20** on a transport plate **14** comprise overturning means **51** configured to overturn a skin **20** on which a layer of adhesive **19** has been deposited.

In particular, said overturning means **51** are configured to overturn a skin **20** from a spreading arrangement, in which the layer of adhesive **19** faces upwards, to a joining arrangement, in which the layer of adhesive **19** faces a transport plate **14**.

In the present embodiment, the overturning means **51** comprise an overturning conveyor **52** in turn comprising a belt **53** moved between two end rollers **54** and **55** respectively.

Said overturning means **51** are positioned above an intermediate conveyor **56**. Said intermediate conveyor **56** is understood to be a belt conveyor, or roller conveyor, or other conveyor configured for the advancement of a flat body, such as a plate, to be understood of a type known per se.

One of said end rollers **54** causes a skin **20** to descend on an underlying transport plate **14**.

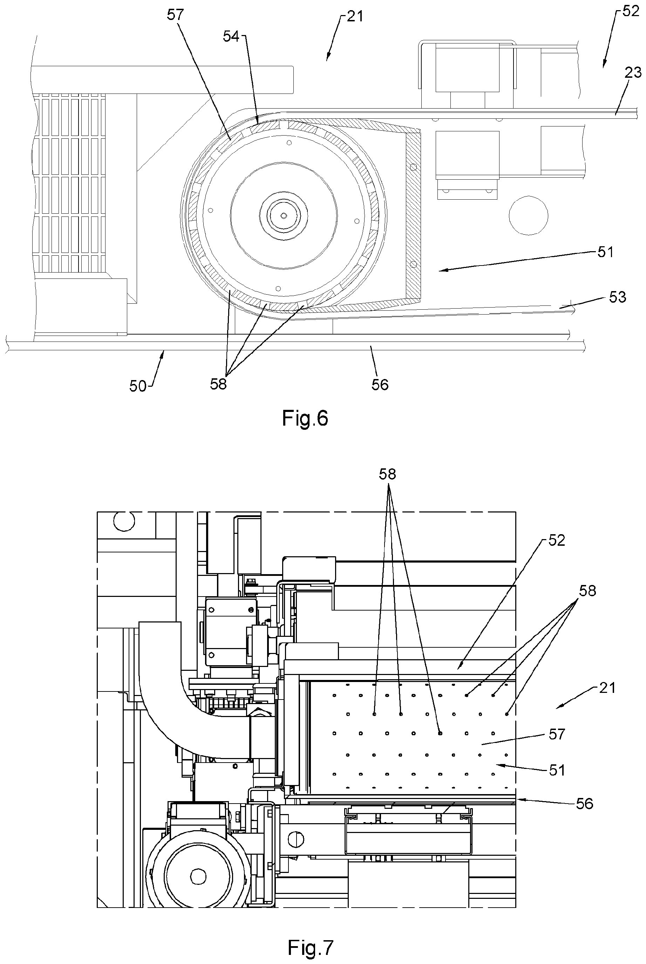

Said end roller **54**, clearly visible in figures 6, 7 and 8, has a perforated cylindrical wall **57**, defining inside a chamber **59** which perforated cylindrical wall **57** has a matrix of through holes **58**.

The end roller **54** is connected to suction means configured to cause a vacuum inside the chamber **59**.

The belt **53** is breathable, i.e. it allows the passage of air.

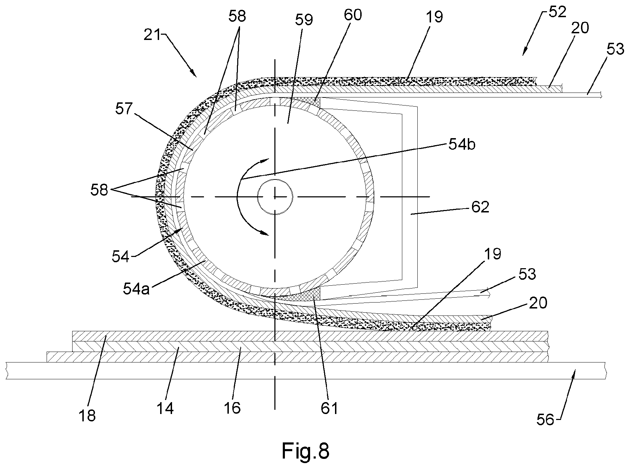

By means of the matrix of through holes **58** and the belt **53**, the suction means retain a skin **20** which is at the end roller **54**, as exemplified in figure 8.

The suction means are to be understood of a type known per se, such as for example an air suction pump.

Said air suction pump is connected with a rotating joint at the rotation axis of the end suction roller **54**.

The belt **53** is constituted, for example, by a perforated carpet, or by a net. The rotation of the end suction roller **54** causes the equal rotation of the skin **20** which is thus overturned and unloaded below the overturning conveyor **52** above a transport plate **14** which is transiting in a synchronized way.

The end suction roller **54** also comprises sealing means configured to cause a suction arc **54a**, as shown in figure 8, of the end roller itself, i.e. a predetermined rotation angle along which the end suction roller **54** expresses its capability of retaining a skin **20**, and outside of which the end suction roller **54** does not act.

Said sealing means comprise, by way of example, two longitudinal sealing bodies **60** and **61**, an upper and a lower one, supported by an anti-suction casing **62**.

The longitudinal sealing bodies **60** and **61** are positioned so that the suction arc **54a** of the end suction roller **54** has an amplitude **54b** of not less than 180° and of substantially 180°.

The anti-suction casing **62** is to be understood as to be supported by a supporting frame.

A synchronization conveyor **64** is interposed between the overturning means **51** and the second deposition means **40**.

Said synchronization conveyor **64** is driven alternatively substantially at two speeds:
- a first speed, corresponding to the speed of an unloading conveyor **42,** for the transfer of the skin **20** with the layer of adhesive **19** from the unloading conveyor **42** to the synchronization conveyor **64,**
- a second quick unloading speed, for transferring the skin **20** to the belt **53** of the overturning belt **52**.

The term "alternatively" means that the synchronization conveyor **64** operates for a first time interval at the first speed and for a second time interval, following the first time interval, at the second speed.

Between the first time interval and the second time interval there may be a stop period of the synchronization conveyor **64**.

A first speed can be for example 9 meters per minute.

A second speed can range, for example, between 20 meters per minute and 45 meters per minute.

The overturning conveyor **52** is in turn also driven alternately at two speeds:
- a first reception speed, corresponding to the second quick unloading speed of the synchronization conveyor **64,**
- a second overturning speed, at which the skin **20** is overturned by the overturning conveyor **52** to a transport plate **14** transiting below the end suction roller **54** of the same overturning conveyor **52**.

The term "alternatively" means that the overturning conveyor **52** operates for a first time interval at the first speed and for a second time interval, following the first time interval, at the second speed.

Between the first time interval and the second time interval there may be a stop period of the overturning conveyor **52**.

A first speed can range, for example, between 20 meters per minute and 45 meters per minute.

A second speed can be for example 5 meters per minute.

For example, if the speed of an unloading conveyor **42** of the second deposition means **40** is about 9 meters per minute, and the speed of the belt **53** of the overturning conveyor **52** is about 5 meters per minute, the synchronization conveyor **64** when it receives a skin **20** from the unloading conveyor **42** operates as follows:
- in a first step of loading a skin **20,** the synchronization conveyor **64** runs at the first speed of 9 meters per minute, that is at the same speed as an unloading conveyor **42**;
- in a second step, the synchronization conveyor **64** stops and waits for the overturning conveyor **52** to unload a skin **20** already placed thereon;
- in a third step of transferring a skin **20** to the overturning conveyor **52,** following the completion of an overturning and unloading operation of a skin by the overturning conveyor **52,** the synchronization conveyor **64** runs at the second speed ranging, for example, between 20 meters per minute and 45 meters per minute, at which second speed also the overturning conveyor **52** operates simultaneously after the completion of an overturning and unloading operation of a skin.

In this way, thanks to the alternation between a stop interval of a skin on the synchronization conveyor **64** and a high-speed operating step, i.e. the second speed between 20 and 45 meters per second, the production rate is optimized without stressing the skins **20**.

The speed of the belt **53** of the overturning conveyor **52** of the overturning means and the advancement speed of the advancement means **50,** and specifically of the intermediate conveyor **56,** which make the transport plates **14** advance, are coordinated in such a way as to tension a skin **20** which is overturned by the belt **53** above a transport plate **14**; this skin **20** is tensioned by a higher speed of the transport plate **14** with respect to the skin **20**.

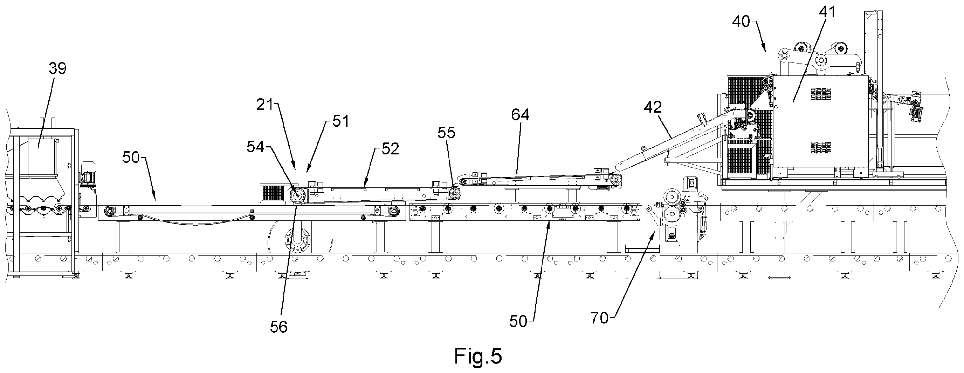

The positioning means **21** comprise, in addition to the overturning means **51,** also an auxiliary smoothing calender **70,** exemplified in figure 5, configured to ensure that the skin **20** fully adheres to the transport plate **14**.

In the present embodiment, the third group **13** comprises four presses **25, 25a, 25b** and **25c** respectively.

A press **25** is described below, meaning thereby that the other presses are equal.

In the present embodiment, the lower plane **26** is constituted by a movable, heated plate, driven vertically by the closing and opening means **28**.

The upper plane **27** comprises a fixed plate.

The closing and opening means **28** comprise, for example, a series of hydraulic cylinders **28a**, configured to shift the lower plane **26** in a vertical direction.

The hydraulic cylinders allow an opening and closing speed of the press much higher than the pneumatically operated presses of the known type; moreover, said hydraulic cylinders allow higher pressures to be achieved with a greater operating speed, to the full advantage of the production rates of the plant **10**.

The thrust levelling layer **29** is fixed to the upper plane **27**.

Said thrust levelling layer **29** is made, for example and not exclusively, of felt. Said levelling layer **29** can have a thickness between 5 millimetres and 10 millimetres, for example 7 millimetres.

The two lower **26** and upper **27** planes are made of steel.

Although said planes **26** and **27** can be perfect in terms of flatness, it is necessary to take into account the differences in thickness in the skin **20**, or in the silicone support layer **16**; the levelling layer **29**, that is the felt layer, is configured in such a way as to yield adapting to the surface shapes of the skin **20** thus distributing the thrust between the two planes **26** and **27** uniformly over the entire surface of the skin **20** being processed.

In particular, the levelling layer **29** can comprise reinforcing layers, for example of cloth or other equivalent layer.

The levelling layer **29** is kept in position and under tension by means of two opposed locking pliers, schematized in figure 9 and indicated therein with the numbers **27a** and **27b**.

The reinforcing layers of the levelling layer **29** ensure that this does not break due to the action of the locking pliers **27a** and **27b**.

The protective film **30** may comprise a fabric, or a non-woven fabric, or a combination of both.

In the embodiment of the invention described herein, the protective film **30** comprises a porous protective fabric film.

Said porous protective fabric film is made, for example, of a glassy material and impregnated with PTFE, for example with Teflon.

Said protective film **30** creates a non-stick protective barrier of the polyurethane deposited on the transport plate **14** and not covered by the skin **20**; in fact, when the skin **20** is pressed against the transport plate **14** inside a press **25**, the polyurethane that is present around the skin **20**, that is outside the area occupied by the skin **20** itself, could stick to the levelling layer **29**, i.e. to the felt layer, in a completely undesirable and harmful way.

The protective film **30**, which at the same time is also breathable, prevents the adhesion of the polyurethane to the levelling layer **29**, but allows the evaporation of humidity from the skin **20**.

The humidity is discharged through the levelling layer **29** and goes into the environment.

Each heat press **25** comprises a reel **30a** of new protective film **30** and an opposite winding reel **30b** for the used protective film.

At least the winding reel **30b** is driven by manual means, for example by means of a crank.

Alternatively, the winding reel **30b** is motor driven.

Periodically, the protective film **30** can be replaced automatically by activating the winding reel **30b**; the rotation of the winding reel **30b** causes the winding of the used protective film **30** and the unwinding of a new protective film **30** which is placed below the felt layer in place of the used protective film.

The hot press **25** is configured to operate with the lower plane **26** at a temperature between 85°C and 100°C.

Preferably, the hot press **25** is configured to operate with the lower plane **26** at a temperature between 90°C and 95°C.

The hot press **25** is configured to operate with the upper plane **27** at a temperature of 70°C.

The temperature of 70°C for the upper plane **27** causes the felt levelling layer **29** to dry, so that the humidity released by the skin **20** is not collected there. The hot press **25** causes the skin **20** to be glued, through the layer of adhesive **19**, on the finishing layer **18**, in polyurethane, which finishing layer **18** is sprayed on the layer for support and for shaping **16**, made of silicone.

The hot press **25** is configured to operate at a pressure ranging between 1 kg/cm² and 3.5 kg/cm²; preferably, the hot press **25** causes a pressure of 2 kg/cm².

The plant **10** according to the invention is configured to operate on two consecutive transport plates **14**; this means that two transport plates **14** simultaneously receive the same treatment.

In the present embodiment, each skin **20** with a corresponding transport plate **14** receives two pressing steps, each of which in a different hot press **25**. Hence, the plant **10** according to the invention described herein has four hot presses **25, 25a, 25b, 25c** arranged in series.

Two consecutive transport plates **14** are therefore arranged:
- for a first pressing step: a first plate in a first press **25** and a second plate in a second press **25a,**
- for a second pressing step: the first plate in a third press **25b** and the second plate in a fourth press **25c**.

The plant **10** according to the invention can obviously be configured to operate on a single transport plate **14** and can therefore comprise two hot presses **25** instead of four.

Still alternatively, the plant **10** according to the invention is configured to operate on three or more consecutive transport plates **14**; this means that three or more transport plates **14** simultaneously receive a same treatment. Each skin **20** then receives a first pressing operation at 2 kg/cm² for 15 seconds, followed by an intermediate evaporation step with the press open for 8 - 10 seconds, and then a second pressing operation for another 15 seconds. In one of its embodiments, the plant **10** according to the invention can have two hot presses **25,** each of which configured to operate two consecutive pressing operations on a same skin **20,** with interposition of an opening interval of 8 - 10 seconds between the first pressing operation and the second pressing operation.

Alternatively, a plant **10** according to the invention can be used performing a single pressing operation on a skin **20,** lasting for a time ranging between 20 and 25 seconds, and preferably of about 20 seconds.

Thanks to a similar hot press **25** with the lower **26** and upper **27** planes heated respectively at 90 - 95°C and at 70°C, and by subjecting the skins **20** to two pressing operations of 15 seconds at 2 kg/cm², a perfect adhesion between the skin **20** and the finishing layer **18** is achieved, making any humidity trapped between the layer of adhesive **19** and the finishing layer **18** during the superimposition step of the skin **20** on the transport plate **14** completely disappear.

The bubbles between the layer of adhesive **19** and the finishing layer **18** in polyurethane, which cause the imperfect adhesion between the skin and the polyurethane with consequent formation of "orange peel" defects on the skin, are the defect the elimination of which is aimed with the plant **10** according to the invention.

The plant **10** according to the invention also comprises a return path **80** for the ennobled skins.

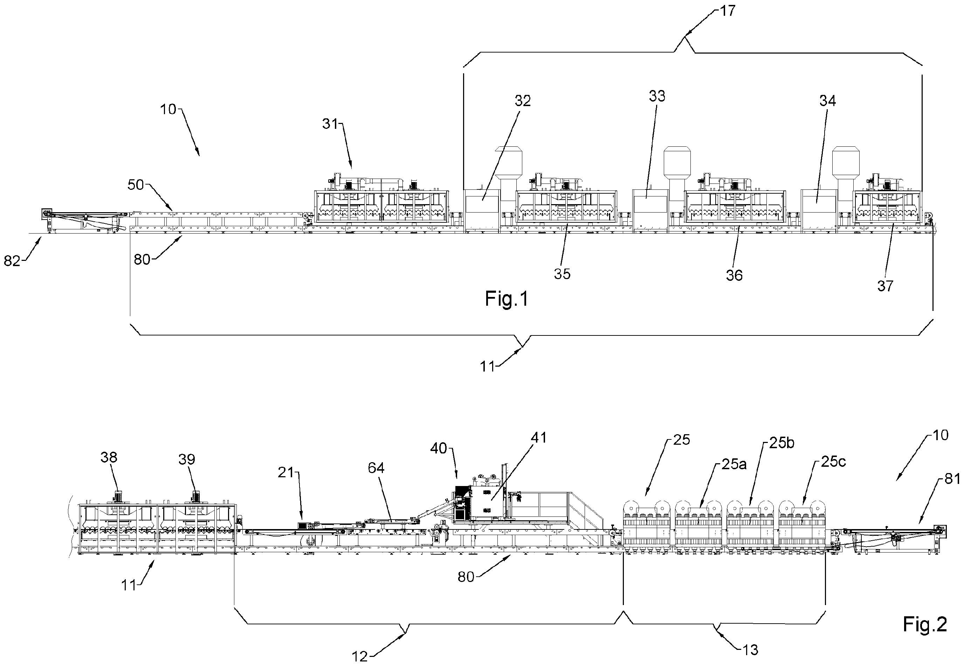

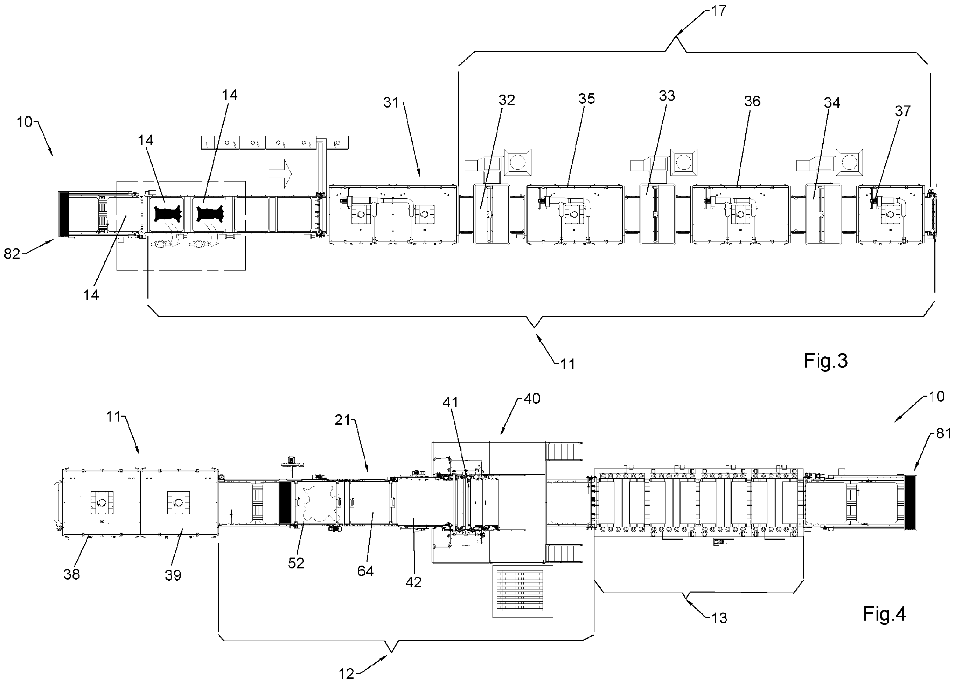

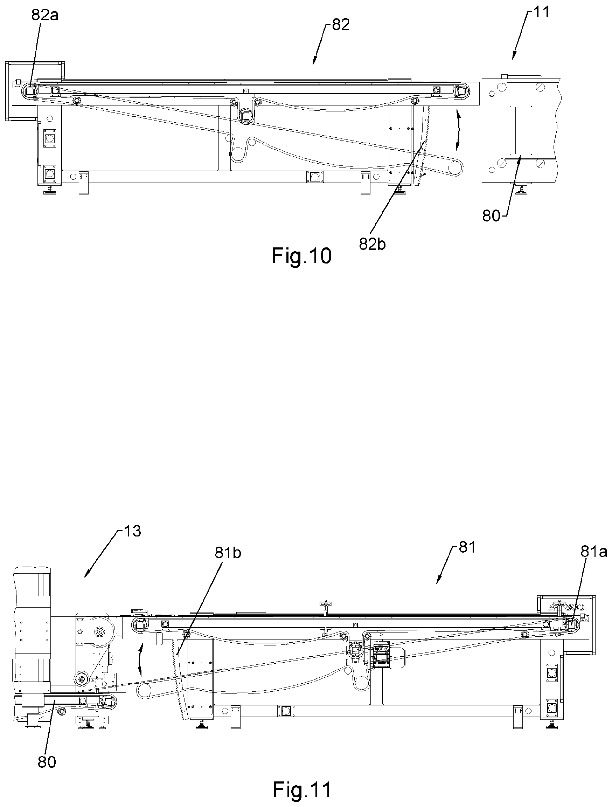

Said return path **80** is schematized in figures 1, 2, 3 and 4 and exemplified in figures 10 and 11.

Said return path **80** develops below the three groups first **11**, second **12** and third **13**.

Said return path **80** comprises an initial lowering conveyor **81** located downstream of the third group **13**.

The return path **80** also comprises a final lifting conveyor **82** located upstream of the first group **11**.

The initial conveyor **81** is a belt type conveyor.

Said initial conveyor **81** is configured to transfer one or more transport plates **14** from a first processing height to a second return height.

Said initial conveyor **81** comprises means for varying the inclination thereof.

Such means for varying the inclination comprise, by way of example, a rack system comprising on one side a fulcrum **81a** for the frame of the initial conveyor **81** and on the opposite side an arched rack **81b** meshed with a motorized pinion integral with the frame of the initial conveyor **81**.

The final conveyor **82** is configured to transfer one or more transport plates **14** from the second return height to the first processing height.

Said final conveyor **82** comprises means for varying the inclination thereof.

Such means for varying the inclination comprise, by way of example, analogously to what described for the initial conveyor **81**, a rack system comprising on one side a fulcrum **82a** for the frame of the final conveyor **82** and on the opposite side an arched rack **82b** meshed with a motorized pinion integral with the frame of the final conveyor **82**.

The return path **80** advantageously develops below the advancement means **50** which define the forward path.

In particular, the return path **80** comprises a plurality of roller or belt conveyors arranged in series below the three groups first **11**, second **12** and third **13**, configured to move the transport plates **14,** carrying the ennobled skins **20,** from the initial conveyor **81** to the final conveyor **82**.

The return path **80** is made at a speed such as to allow drying and cooling of the ennobled skins **20** such that the skins **20** are superimposable one onto the other on a stand without them improperly adhering one to the other.

The invention also relates to a process for ennobling skins.

This process comprises the following steps:
- arranging a transport plate **14** so as to receive a finishing layer **18** bringing the temperature of said transport plate **14** to a value ranging between 80°C and 105°C;
- carrying out on said heated transport plate **14** at least one step of spraying a finishing layer **18**;
- carrying out a step of drying said transport plate **14** after each of said at least one spraying step;
- bringing the temperature of said transport plate **14** to a value lower than 35°C; preferably, the temperature of the transport plate **14** is brought to a value lower than 30°C;
- defining a layer of adhesive **19** on a skin **20** to be ennobled;
- positioning said skin **20** on said transport plate **14** with said layer of adhesive **19** above said finishing layer **18**;
- carrying out at least one pressing operation on said skin **20** and said transport plate **14** at a temperature ranging between 75°C and 110°C, at a pressure ranging between 1 kg/cm² and 5 kg/cm².

Such at least one pressing operation is carried out for a time interval ranging between 10 seconds and 25 seconds.

In a first embodiment, the process according to the invention comprises at least two pressing operations interspersed with an operation for evacuating the developed vapour.

In particular, the process according to the invention comprises:
- a first pressing operation for a time interval of about 15 seconds with the lower plane **26** at a temperature ranging between 85°C and 100°C, with a pressure between 2 kg/cm² and 3 kg/cm²;
- a vapour evacuation operation, with opening of the hot press **25** for a time interval ranging between 8 seconds and 10 seconds;
- a second pressing operation for a time interval of about 15 seconds with the lower plane **26** at a temperature ranging between 85°C and 100°C, with a pressure between 2 kg/cm² and 3 kg/cm²; preferably, said second pressing operation is carried out for a time interval of about 15 seconds with the lower plane **26** at a temperature ranging between 90°C and 95°C.

Preferably, the pressing operations are carried out at a pressure of 2 kg/cm².

Preferably, the first and second pressing operations are carried out with the lower plane **26** at a temperature ranging between 90°C and 95°C.

Preferably, the upper plane **27** is at a temperature of 70°C; this temperature favours the drying of the levelling layer **29**, in the present embodiment being it a felt layer.

Following the last pressing operation, the process also comprises a cooling step.

Said cooling step is adapted to bring the ennobled skins **20** to an ambient temperature.

Said ambient temperature has a value, for example, of 20°C.

Said cooling step provides for the ennobled skins **20** to be moved at ambient temperature for a time interval ranging between 15 minutes and 20 minutes.

In particular, in the present embodiment, the skins **20** are moved on board of the respective transport plates **14**, along the return path **80**.

Still in particular, at the outlet from the last hot press, for example the press **25c**, the transport plates **14** are transferred to the initial conveyor **81** of the return path **80**.

Subsequently, the initial lowering conveyor **81** is inclined and driven in the opposite direction so as to slide the transport plates **14** towards the return path **80** which is below the advancement means **50** defining the forward path.

At the end of the return path **80**, the transport plates **14** reach the final ascent conveyor **82**, which is in an inclined arrangement so as to allow the transport plates **14** to slide from the height of the return path **80** to the height of the advancement means **50**.

The process according to the invention, in the present embodiment example, comprises three steps of spraying polyurethane, carried out in the pigmentation booths **32**, **33** and **34** respectively.

Said process, thanks to the plant **10** according to the invention, allows to perform the first spraying operation with the transport plate **14**, that is the matrix, which in the first heating station **31** has been brought to a temperature ranging between 95°C and 100°C.

Then, the matrix is first heated and then the polyurethane is sprayed. Afterwards the spraying dries, even if a partial evaporation takes place already a little in the booths, inside which a suction system for the evacuation of the fumes is operating.

The second heating stations **35, 36** and **37** cause the drying to be continued while maintaining the transport plate **14** at the pre-established spraying temperature, between 95°C and 100°C.

The plant **10** according to the invention, in one of its embodiments not illustrated, has a single press **25**.

The process according to the invention, in a variant embodiment thereof, provides for a single pressing operation for a time interval of 20 seconds with the lower plane **26** at a temperature ranging between 90°C and 95°C, with a pressure between 2 kg/cm² and 3 kg/cm².

When the skin **20** is pressed against the finishing layer **18** at a pressure of 2 kg/cm² at 90°C, the layer of adhesive **19** is activated, and at that moment the finishing layer **18** sticks to the layer of adhesive **19**. To obtain this technical effect, it is essential that the temperature of the transport plate **14** with the finishing layer **18,** before meeting the skin **20** bearing the layer of adhesive **19,** is brought to a temperature not higher than 35°C at the coupling point; at this temperature and in the absence of compression, there is the assurance that no adhesion occurs between the finishing layer **18** and the layer of adhesive **19**.

It has in practice been established that the invention achieves the intended task and objects.

In particular, with the invention a plant has been developed which allows to realise ennobled skins with less superficial imperfections than the similar ennobled skins obtained with known plants.

Furthermore, with the invention a process has been developed which allows to realise ennobled skins with less superficial imperfections than the similar ennobled skins obtained with known processes.

In addition, with the invention a plant has been developed capable of ensuring a correct cooling of the ennobled skins with a smaller overall dimension than the known plants.

In practice, any components and materials can be used according to the requirements and the state of the art, as long as they are compatible with the specific use, the dimensions and the contingent shapes.

Where the characteristics and techniques mentioned in any claim are followed by reference notes, such reference notes should be intended as having been added for the sole purpose of increasing the intelligibility of the claims and consequently such reference notes have no limiting effect on the interpretation of each element identified by way of example by such reference notes.

## Claims

1. A plant (10) for ennobling skins and leather, comprising:
- a first group (11) for preparing a finishing layer to be transferred onto a skin,
- a second group (12) for preparing a skin to receive said finishing layer,
- a third group (13) for transferring said finishing layer onto said skin,
**characterized in that**
said first group (11) comprises:
- a transport plate (14), having a layer for support and for shaping of the finishing (16),
- means (17) for realising a finishing layer (18) on said layer for support and for shaping (16);
said second group (12) comprises:
- deposition means (40) for depositing a layer of adhesive (19) onto a skin (20),
- positioning means (21) for positioning said skin (20) on said transport plate (14) with said layer of adhesive (19) positioned above said finishing layer (18);
said third group (13) comprises:
- at least one hot press (25), comprising in turn:
- a lower plane (26),
- an upper plane (27),
- closing and opening means (28) of said two planes (26, 27) one with respect to the other,
- a thrust levelling layer (29) between said lower (26) and upper (27) planes, interposed between a skin (20) and said upper plane (27),
- a protective film (30), interposed between said thrust levelling layer (29) and said skin (20).

2. The plant according to claim 1, **characterized in that** said first group (11) comprises a first heating station (31) for pre-heating said layer for support and for shaping (16), for example a diathermic oil heating station.

3. The plant according to the preceding claim, **characterized in that** said first heating station (31) is configured to raise the temperature of a transport plate (14) up to a value ranging between 95°C and 100°C.

4. The plant according to one or more of the preceding claims, **characterized in that** said means (17) for realising a finishing layer (18) comprise at least one pigmentation booth followed by a corresponding second heating station.

5. The plant according to one or more of the preceding claims, **characterized in that** it comprises pigmentation booths (32, 33, 34) configured for spraying polyurethane.

6. The plant according to one or more of the preceding claims, **characterized in that** said first group (11) comprises one or more cooling stations (38, 39) configured to bring the transport plates (14), with said layer for support and for shaping (16) and said finishing layer (18), to a temperature lower than 35°C.

7. The plant according to one or more of the preceding claims, **characterized in that** said positioning means (21) for positioning a skin (20) on a transport plate (14) comprise overturning means (51) configured to overturn a skin (20) on which a layer of adhesive (19) has been deposited.

8. The plant according to the preceding claim, **characterized in that** said overturning means (51) comprise an overturning conveyor (52) which in turn comprises a belt (53) moved between two end rollers (54, 55), one of said end rollers (54) causing a skin (20) to descend on an underlying transport plate (14), said end roller (54) having a perforated cylindrical wall (57), defining inside a chamber (59), which perforated cylindrical wall (57) has a matrix of through holes (58), said end roller (54) being connected to suction means configured to cause a vacuum inside said chamber ( 59).

9. The plant according to claim 1, **characterized in that** said lower plane (26) is constituted by a movable plate, driven vertically by said closing and opening means (28), said upper plane (27) comprising a fixed plate.

10. The plant according to claim 1, **characterized in that** said thrust levelling layer (29) is made of felt.

11. The plant according to claim 1, **characterized in that** said protective film (30) comprises a porous protective fabric film made of a glassy material and impregnated with PTFE.

12. The plant according to one or more of the preceding claims, **characterized in that** it comprises a return path (80) for ennobled skins, said return path (80) developing below the three groups first (11), second (12) and third (13).

13. A process for ennobling skins, **characterized in that** it comprises the following steps:
- arranging a transport plate (14) so as to receive a finishing layer (18) bringing the temperature of said transport plate (14) to a value ranging between 80°C and 105°C,
- carrying out on said heated transport plate (14) at least one step of spraying a finishing layer (18),
- carrying out a step of drying said transport plate (14) after each of said at least one spraying step,
- bringing the temperature of said transport plate (14) to a value lower than 45°C,
- defining a layer of adhesive (19) on a skin (20) to be ennobled,
- positioning said skin (20) on said transport plate (14) with said layer of adhesive (19) above said finishing layer (18),
- carrying out at least one pressing operation on said skin (20) and on said transport plate (14) at a temperature ranging between 75°C and 110°C, at a pressure ranging between 1 kg/cm² and 5 kg/cm².

14. The process according to the preceding claim, **characterized in that** said at least one pressing operation is carried out for a time interval ranging between 10 seconds and 25 seconds.

15. The process according to claim 13, **characterized in that** said at least one pressing operation comprises:
- a first pressing operation for a time interval of about 15 seconds with a lower plane (26) of a hot press (25) at a temperature ranging between 85°C and 100°C, with a pressure between 2 kg/cm² and 3 kg/cm²,
- a vapour evacuation operation, with opening of said hot press (25) for a time interval ranging between 8 seconds and 10 seconds,
- a second pressing operation for a time interval of about 15 seconds with said lower plane (26) at a temperature ranging between 85°C and 100°C, with a pressure between 2 kg/cm² and 3 kg/cm².

## Patentansprüche

1. Anlage (10) zum Veredeln von Häuten und Leder, umfassend:
- eine erste Gruppe (11) zum Vorbereiten einer auf eine Haut zu übertragenden Deckschicht,
- eine zweite Gruppe (12) zum Vorbereiten einer Haut, um die Deckschicht aufzunehmen,
- eine dritte Gruppe (13) zum Übertragen der Deckschicht auf die Haut,
**dadurch gekennzeichnet, dass**
die erste Gruppe (11) umfasst:
- eine Transportplatte (14), die eine Schicht zur Abstützung und zur Formgebung der Deckung (16) aufweist,
- Mittel (17) zum Realisieren einer Deckschicht (18) auf der Schicht zur Abstützung und zur Formgebung (16);
die zweite Gruppe (12) umfasst:
- Abscheidemittel (40) zum Abscheiden einer Klebstoffschicht (19) auf einer Haut (20),
- Positionierungsmittel (21) zum Positionieren der Haut (20) auf der Transportplatte (14), wobei die Klebstoffschicht (19) über der Deckschicht (18) positioniert ist;
die dritte Gruppe (13) umfasst:
- mindestens eine Heißpresse (25), die wiederum Folgendes umfasst:
- eine untere Ebene (26),
- eine obere Ebene (27),
- Schließ- und Öffnungsmittel (28) der zwei Ebenen (26, 27) zueinander,
- eine Schubnivellierschicht (29) zwischen der unteren (26) und der oberen (27) Ebene, die zwischen einer Haut (20) und der oberen Ebene (27) angeordnet ist,
- eine Schutzfolie (30), die zwischen der Schubnivellierschicht (29) und der Haut (20) angeordnet ist.

2. Anlage nach Anspruch 1, **dadurch gekennzeichnet, dass** die erste Gruppe (11) eine erste Heizstation (31) zum Vorheizen der Schicht zur Abstützung und zur Formgebung (16) umfasst, beispielsweise eine diathermische Ölheizstation.

3. Anlage nach dem vorhergehenden Anspruch, **dadurch gekennzeichnet, dass** die erste Heizstation (31) so konfiguriert ist, dass sie die Temperatur einer Transportplatte (14) bis auf einen Wert im Bereich zwischen 95 °C und 100 °C erhöht.

4. Anlage nach einem oder mehreren der vorhergehenden Ansprüche, **dadurch gekennzeichnet, dass** die Mittel (17) zur Realisierung einer Deckschicht (18) mindestens eine Pigmentierkabine gefolgt von einer entsprechenden zweiten Heizstation umfassen.

5. Anlage nach einem oder mehreren der vorhergehenden Ansprüche, **dadurch gekennzeichnet, dass** sie Pigmentierkabinen (32, 33, 34) umfasst, die zum Versprühen von Polyurethan konfiguriert sind.

6. Anlage nach einem oder mehreren der vorhergehenden Ansprüche, **dadurch gekennzeichnet, dass** die erste Gruppe (11) eine oder mehrere Kühlstationen (38, 39) umfasst, die konfiguriert sind, um die Transportplatten (14) mit der Schicht zur Abstützung und zur Formgebung (16) und der Deckschicht (18) auf eine Temperatur von weniger als 35 °C zu bringen.

7. Anlage nach einem oder mehreren der vorhergehenden Ansprüche, **dadurch gekennzeichnet, dass** die Positionierungsmittel (21) zum Positionieren einer Haut (20) auf einer Transportplatte (14) Kippmittel (51) umfassen, die so konfiguriert sind, dass sie eine Haut (20), auf der eine Klebstoffschicht (19) abgeschieden wurde, umkippen.

8. Anlage nach dem vorhergehenden Anspruch, **dadurch gekennzeichnet, dass** die Kippmittel (51) einen Kippförderer (52) umfassen, der wiederum ein Band (53) umfasst, das zwischen zwei Endrollen (54, 55) bewegt wird, wobei eine der Endrollen (54) bewirkt, dass eine Haut (20) auf eine darunter liegende Transportplatte (14) herabfällt, wobei die Endrolle (54) eine perforierte zylindrische Wand (57) aufweist, die innerhalb einer Kammer (59) definiert, wobei die perforierte zylindrische Wand (57) eine Matrix von Durchgangslöchern (58) aufweist, wobei die Endrolle (54) mit Saugmitteln verbunden ist, die konfiguriert sind, um einen Unterdruck innerhalb der Kammer (59) zu verursachen.

9. Anlage nach Anspruch 1, **dadurch gekennzeichnet, dass** die untere Ebene (26) durch eine bewegliche Platte gebildet wird, die vertikal durch die Schließ- und Öffnungsmittel (28) angetrieben wird, wobei die obere Ebene (27) eine feste Platte umfasst.

10. Anlage nach Anspruch 1, **dadurch gekennzeichnet, dass** die Schubnivellierschicht (29) aus Filz besteht.

11. Anlage nach Anspruch 1, **dadurch gekennzeichnet, dass** die Schutzfolie (30) eine poröse Schutzgewebefolie umfasst, die aus einem glasartigen Material besteht und mit PTFE imprägniert ist.

12. Anlage nach einem oder mehreren der vorhergehenden Ansprüche, **dadurch gekennzeichnet, dass** sie einen Rückführweg (80) für veredelte Häute umfasst, wobei sich der Rückführweg (80) unterhalb der drei Gruppen erste (11), zweite (12) und dritte (13) entwickelt.

13. Verfahren zum Veredeln von Häuten, **dadurch gekennzeichnet, dass** es die folgenden Schritte umfasst:
- Anordnen einer Transportplatte (14), um eine Deckschicht (18) aufzunehmen, wobei die Temperatur der Transportplatte (14) auf einen Wert im Bereich zwischen 80 °C und 105 °C gebracht wird,
- Durchführen mindestens eines Schritts zum Sprühen einer Deckschicht (18) auf die beheizte Transportplatte (14),
- Durchführen eines Schritts zum Trocknen der Transportplatte (14) nach jedem des mindestens einen Sprühschritts,
- Bringen der Temperatur der Transportplatte (14) auf einen Wert unter 45 °C,
- Definieren einer Klebstoffschicht (19) auf einer zu veredelnden Haut (20),
- Positionieren der Haut (20) auf der Transportplatte (14) mit der Klebstoffschicht (19) über der Deckschicht (18),
- Durchführen mindestens eines Pressvorgangs auf der Haut (20) und auf der Transportplatte (14) bei einer Temperatur im Bereich zwischen 75 °C und 110 °C, bei einem Druck im Bereich zwischen 1 kg/cm² und 5 kg/cm².

14. Verfahren nach dem vorhergehenden Anspruch, **dadurch gekennzeichnet, dass** der mindestens eine Pressvorgang für ein Zeitintervall im Bereich zwischen 10 Sekunden und 25 Sekunden durchgeführt wird.

15. Verfahren nach Anspruch 13, **dadurch gekennzeichnet, dass** der mindestens eine Pressvorgang Folgendes umfasst:
- einen ersten Pressvorgang für ein Zeitintervall von etwa 15 Sekunden mit einer unteren Ebene (26) einer Heißpresse (25) bei einer Temperatur im Bereich zwischen 85 °C und 100 °C, mit einem Druck zwischen 2 kg/cm² und 3 kg/cm²,
- einen Dampfevakuierungsvorgang mit Öffnung der Heißpresse (25) für ein Zeitintervall im Bereich zwischen 8 Sekunden und 10 Sekunden,
- einen zweiten Pressvorgang für ein Zeitintervall von etwa 15 Sekunden mit der unteren Ebene (26) bei einer Temperatur im Bereich zwischen 85 °C und 100 °C mit einem Druck zwischen 2 kg/cm² und 3 kg/cm².

## Revendications

1. Installation (10) pour l'ennoblissement de peaux et de cuirs, comprenant:
- un premier groupe (11) pour la préparation d'une couche de finition à transférer sur la peau,
- un deuxième groupe (12) pour la préparation d'une peau destinée à recevoir ladite couche de finition,
- un troisième groupe (13) pour transférer ladite couche de finition sur ladite peau,
**caractérisée en ce que**
ledit premier groupe (11) comprend:
- une plaque de transport (14), comprenant une couche de support et de façonnage de la finition (16),
- des moyens (17) pour réaliser une couche de finition (18) sur ladite couche de support et de façonnage (16);
ledit deuxième groupe (12) comprend:
- des moyens de dépôt (40) pour déposer une couche d'adhésif (19) sur une peau (20),
- des moyens de positionnement (21) pour positionner ladite peau (20) sur ladite plaque de transport (14) avec ladite couche d'adhésif (19) positionnée au-dessus de ladite couche de finition (18);
ledit troisième groupe (13) comprend:
- au moins une presse à chaud (25), comprenant à son tour:
- un plan inférieur (26),
- un plan supérieur (27),
- des moyens de fermeture et d'ouverture (28) desdits deux plans (26, 27) l'un par rapport à l'autre,
- une couche de nivellement de poussée (29) entre lesdits plans inférieur (26) et supérieur (27), interposée entre une peau (20) et ledit plan supérieur (27),
- un film protecteur (30), interposé entre ladite couche de nivellement de poussée (29) et ladite peau (20).

2. Installation selon la revendication 1, **caractérisée en ce que** ledit premier groupe (11) comprend une première station de chauffage (31) pour préchauffer ladite couche de support et de façonnage (16), par exemple une station de chauffage à l'huile diathermique.

3. Installation selon la revendication précédente, **caractérisée en ce que** ladite première station de chauffage (31) est configurée pour élever la température d'une plaque de transport (14) jusqu'à une valeur comprise entre 95°C et 100°C.

4. Installation selon une ou plusieurs des revendications précédentes, **caractérisée en ce que** lesdits moyens (17) pour réaliser une couche de finition (18) comprennent au moins une cabine de pigmentation suivie d'une deuxième station de chauffage correspondante.

5. Installation selon une ou plusieurs des revendications précédentes, **caractérisée en ce qu'**elle comprend des cabines de pigmentation (32, 33, 34) configurées pour la pulvérisation de polyuréthane.

6. Installation selon une ou plusieurs des revendications précédentes, **caractérisée en ce que** ledit premier groupe (11) comprend une ou plusieurs stations de refroidissement (38, 39) configurées pour amener les plaques de transport (14), avec ladite couche de support et de façonnage (16) et ladite couche de finition (18), à une température inférieure à 35°C.

7. Installation selon une ou plusieurs des revendications précédentes, **caractérisée en ce que** lesdits moyens de positionnement (21) pour positionner une peau (20) sur une plaque de transport (14) comprennent des moyens de renversement (51) configurés pour renverser une peau (20) sur laquelle une couche d'adhésif (19) a été déposée.

8. Installation selon la revendication précédente, **caractérisée en ce que** lesdits moyens de renversement (51) comprennent un convoyeur de renversement (52) qui comprend à son tour une courroie (53) déplacée entre deux rouleaux d'extrémité (54, 55), l'un desdits rouleaux d'extrémité (54) faisant descendre une peau (20) sur une plaque de transport sous-jacente (14), ledit rouleau d'extrémité (54) ayant une paroi cylindrique perforée (57), définissant à l'intérieur une chambre (59), laquelle paroi cylindrique perforée (57) a une matrice de trous traversants (58), ledit rouleau d'extrémité (54) étant relié à des moyens d'aspiration configurés pour provoquer un vide à l'intérieur de ladite chambre (59).

9. Installation selon la revendication 1, **caractérisée en ce que** ledit plan inférieur (26) est constitué par une plaque mobile, entraînée verticalement par lesdits moyens de fermeture et d'ouverture (28), ledit plan supérieur (27) comprenant une plaque fixe.

10. Installation selon la revendication 1, **caractérisée en ce que** ladite couche de nivellement de poussée (29) est faite de feutre.

11. Installation selon la revendication 1, **caractérisée en ce que** ledit film protecteur (30) comprend un film de tissu protecteur poreux fait d'un matériau vitreux et imprégné de PTFE.

12. Installation selon une ou plusieurs des revendications précédentes, **caractérisée en ce qu'**elle comprend une voie de retour (80) pour les peaux ennoblies, ladite voie de retour (80) se développant sous les trois groupes premier (11), deuxième (12) et troisième (13).

13. Procédé d'ennoblissement de peaux, **caractérisé en ce qu'**il comprend les étapes suivantes:
- disposer une plaque de transport (14) de manière à recevoir une couche de finition (18) en portant la température de ladite plaque de transport (14) à une valeur comprise entre 80°C et 105°C,
- effectuer sur ladite plaque de transport chauffée (14) au moins une étape de pulvérisation d'une couche de finition (18),
- effectuer une étape de séchage de ladite plaque de transport (14) après chacune desdites au moins une étape de pulvérisation,
- amener la température de ladite plaque de transport (14) à une valeur inférieure à 45°C,
- définir une couche d'adhésif (19) sur une peau (20) à ennoblir,
- positionner ladite peau (20) sur ladite plaque de transport (14) avec ladite couche d'adhésif (19) au-dessus de ladite couche de finition (18),
- effectuer au moins une opération de pressage sur ladite peau (20) et sur ladite plaque de transport (14) à une température comprise entre 75°C et 110°C, à une pression comprise entre 1 kg/cm² et 5 kg/cm².

14. Procédé selon la revendication précédente, **caractérisé en ce que** ladite au moins une opération de pressage est effectuée pendant un intervalle de temps compris entre 10 secondes et 25 secondes.

15. Procédé selon la revendication 13, **caractérisé en ce que** ladite au moins une opération de pressage comprend:
- une première opération de pressage pendant un intervalle de temps d'environ 15 secondes avec un plan inférieur (26) d'une presse à chaud (25) à une température comprise entre 85°C et 100°C, avec une pression comprise entre 2 kg/cm² et 3 kg/cm²,
- une opération d'évacuation des vapeurs, avec ouverture de ladite presse à chaud (25) pendant un intervalle de temps compris entre 8 secondes et 10 secondes,
- une seconde opération de pressage pendant un intervalle de temps d'environ 15 secondes avec ledit plan inférieur (26) à une température comprise entre 85°C et 100°C, avec une pression comprise entre 2 kg/cm² et 3 kg/cm².
